# FASCICULE DE BREVET EUROPEEN

(11) **EP 0 824 289 B1**
(45) Date de publication et mention de la délivrance du brevet: **12.02.2003**
(21) Numéro de dépôt: 97113650.2
(22) Date de dépôt: 07.08.1997
(51) Int. Cl.: H02P 8/02, G04C 3/14, H02K 16/02

(54) **Transducteur électromécanique comportant deux rotors à aimants permanents**
Elektromechanischer Wandler mit zwei permanentmagnetischen Rotoren
Electromechanical transducer featuring two permanent magnet rotors

(30) Priorité: 14.08.1996 FR 9610201
(43) Date de publication de la demande: 18.02.1998
(73) Titulaire: Eta SA Fabriques d'Ebauches, 2540 Grenchen (CH)
(72) Inventeur: Guérin, Yves, 68300 Saint-Louis (FR)
(74) Mandataire: Balsters, Robert

(56) Documents cités:
- EP-A- 0 161 582
- EP-A- 0 698 957
- US-A- 4 144 467
- US-A- 4 449 086
- US-A- 5 289 452

## Description

La présente invention concerne un transducteur électromécanique comportant deux rotors à aimants permanents. En particulier, la présente invention concerne un ensemble moteur comportant deux rotors à aimant permanent, cet ensemble moteur ayant une structure plane. L'ensemble moteur selon l'invention peut notamment être utilisé dans des applications horlogères.

Il est connu du document EP 0 698 957 un transducteur électromécanique comportant deux rotors. Ce transducteur est formé par deux moteurs biphasés agencés dans un même stator et ayant en commun une bobine. Il présente un stator formé par deux parties longitudinales reliées magnétiquement par cinq noyaux, chacun des deux trous dans le stator pour les deux rotors étant définis par trois pôles statoriques. Ce transducteur permet de commander indépendamment les deux rotors, mais il est encombrant et les trois bobines prévues servent uniquement à l'alimentation du transducteur pour un entraînement pas à pas des deux rotors.

Un but de la présente invention est de fournir un transducteur électromécanique comportant au sein d'une même structure compacte deux rotors à aimant permanent pouvant être commandés indépendamment l'un de l'autre, soit dans un mode de fonctionnement pas à pas, soit dans un mode de fonctionnement accéléré ou continu.

Un but particulier de la présente invention est de fournir un tel transducteur électromécanique qui présente une grande fiabilité lors du fonctionnement de l'un ou l'autre des deux rotors dans un mode accéléré ou continu.

Un autre but de la présente invention est de fournir un transducteur électromécanique du type susmentionné dans lequel chacun des deux rotors peut tourner dans ses deux sens de rotation de manière fiable.

Par fiabilité de fonctionnement, on comprend en particulier le fait que le rotor commandé sélectivement effectue le nombre de pas ou le nombre de tours prévu par la commande, dans un sens prédéterminé.

A cet effet, la présente invention concerne un transducteur électromécanique comprenant un stator et des premier et deuxième rotors comportant respectivement des premier et deuxième aimants permanents bipolaires à aimantation radiale, le stator définissant des premier et deuxième trous statoriques à l'intérieur desquels sont respectivement situés les premier et deuxième aimants permanents. Ce stator comprend une première partie définissant des premier, deuxième et troisième pôles magnétiques, lesdits premier et deuxième pôles magnétiques définissant intégralement le premier trou statorique et lesdits deuxième et troisième pôles magnétiques définissant intégralement le deuxième trou statorique. Les premier, deuxième et troisième pôles magnétiques sont respectivement reliés aux premières extrémités de premier, deuxième et troisième noyaux magnétiques portant respectivement des première, deuxième et troisième bobines, une deuxième partie du stator servant à la fermeture des circuits magnétiques dudit transducteur étant reliée aux deuxièmes extrémités desdits premier, deuxième et troisième noyaux magnétiques, les première et deuxième parties statoriques n'étant reliées magnétiquement que par ces noyaux magnétiques, lesdites bobines étant susceptibles d'être alimentées pour commander indépendamment lesdits premier et deuxième rotors, soit dans un mode de fonctionnement pas à pas, soit dans un mode de fonctionnement accéléré ou continu.

Selon un premier mode de réalisation, les première et troisième bobines sont reliées à des moyens d'alimentation agencés pour alimenter ces première et troisième bobines de manière à entraîner en rotation respectivement les premier et deuxième rotors. La deuxième bobine est connectée à des moyens de détection de la rotation dudit premier rotor ou dudit deuxième rotor. Dans une variante préférée, les moyens de détection sont agencés pour détecter les passages par zéro de la tension induite dans la deuxième bobine lorsque lesdits premier et deuxième rotors sont sélectivement actionnés dans un mode de fonctionnement rapide ou continu par les moyens d'alimentation agencés à cet effet, les moyens de détection étant reliés électriquement aux moyens d'alimentation auxquels ils sont susceptibles de fournir un signal d'entrée lorsque la tension induite dans la deuxième bobine passe par zéro. Les moyens d'alimentation sont agencés pour pouvoir inverser la polarité de la tension d'alimentation lorsqu'ils reçoivent undit signal d'entrée.

Dans un deuxième mode de réalisation du transducteur selon l'invention, il est prévu que la deuxième bobine peut sélectivement être connectée aux moyens d'alimentation pour recevoir un courant d'alimentation ou à des moyens de détection de la rotation du premier rotor ou du deuxième rotor actionné sélectivement.

Dans une variante préférée de ce deuxième mode de réalisation, il est prévu que la deuxième bobine est reliée électriquement en série ou en parallèle avec la première ou avec la troisième bobine selon que le premier ou le deuxième rotor est actionné en rotation dans un mode de fonctionnement pas à pas, et aux moyens de détection susmentionnés lorsqu'un mode de fonctionnement rapide ou continu est activé.

La présente invention sera décrite ci-après en détail au moyen de la description suivante, faite en référence aux dessins annexés, donnés à titre d'exemples nullement limitatif, dans lesquels :
- la figure 1 est une vue schématique de dessus d'un transducteur électromécanique selon l'invention couplé à deux mobiles coaxiaux indépendants;
- la figure 2 est une vue en coupe selon la ligne II-II des figures 1 et 16;
- la figure 3 est une vue de dessus d'une première partie du stator du transducteur de la figure 1, les aimants permanents des deux rotors du transducteur étant représentés schématiquement;
- les figures 4, 5 et 6 représentent respectivement le courant d'alimentation dans une bobine d'alimentation sélectionnée, la tension induite dans une bobine de détection en fonction du temps, et la vitesse de rotation angulaire du rotor entraîné en fonction de l'angle de rotation dans un mode de fonctionnement rapide ou continu en avant;
- les figures 7, 8 et 9 représentent respectivement le courant d'alimentation dans une bobine d'alimentation sélectionnée, la tension induite dans une bobine de détection en fonction du temps, et la vitesse de rotation angulaire du rotor entraîné en fonction de l'angle de rotation dans un mode de fonctionnement rapide ou continu en arrière;
- les figures 10, 11 et 12 représentent respectivement les mêmes variables que celles des figures 7, 8 et 9, mais dans un cas d'une commande de deux pas arrière en mode de fonctionnement rapide ayant abouti à un pas supplémentaire de rotation du rotor;
- les figures 13, 14 et 15 représentent respectivement les mêmes variables que celles des figures 10, 11 et 12 également pour une commande de deux pas arrière dans un mode de fonctionnement rapide pour lequel le nombre de pas du rotor prévu sont effectués correctement, et
- la figure 16 est une vue schématique de dessus d'un deuxième mode de réalisation d'un transducteur électromécanique selon l'invention.

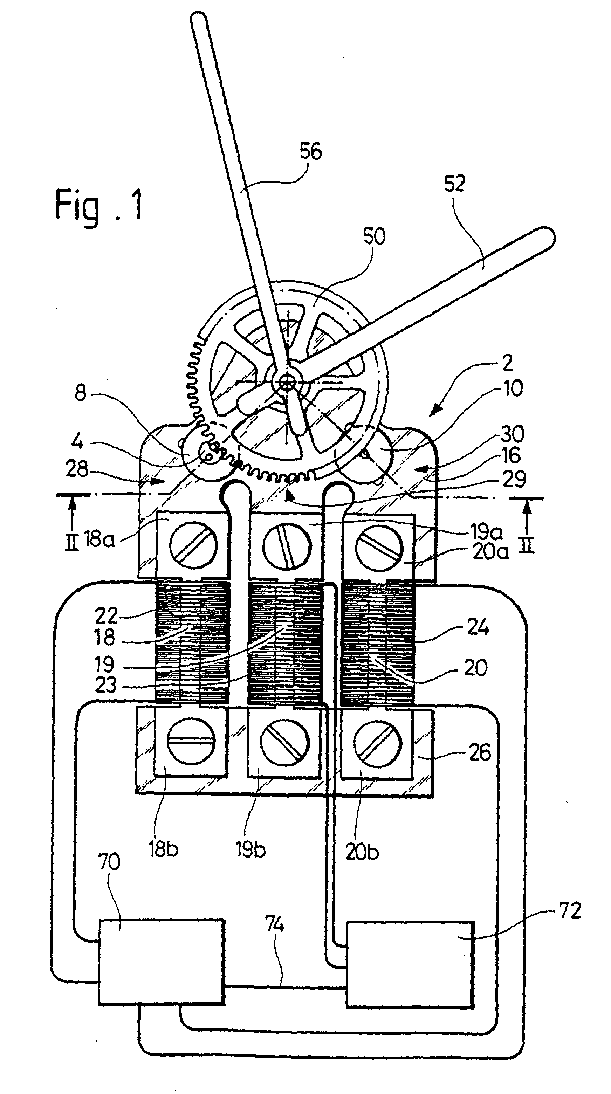

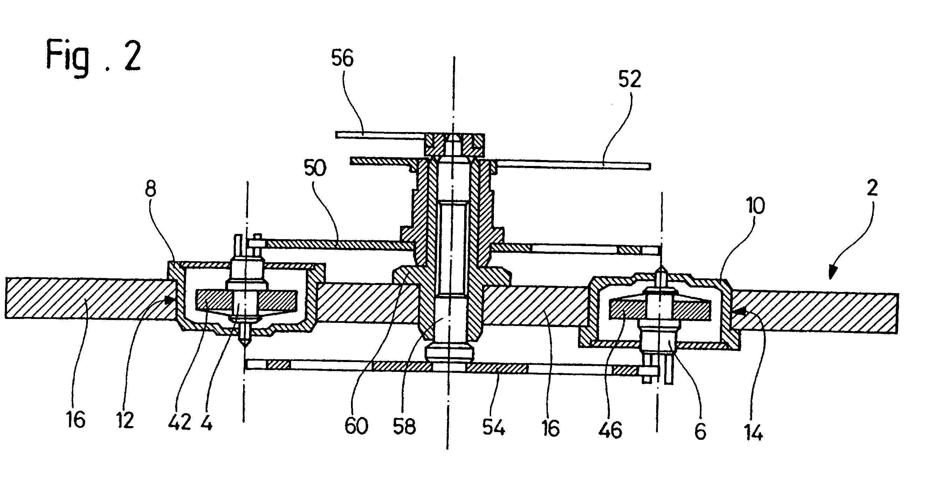

A l'aide des figures 1 à 3, on décrira ci-après un premier mode de réalisation d'un transducteur électromécanique selon l'invention. Dans ce mode de réalisation, il est prévu que le transducteur fonctionne comme moteur.

Le transducteur comprend un stator 2 et deux rotors 4 et 6 logés respectivement dans deux cages rotoriques 8 et 10 montées respectivement dans deux ouvertures ou trous statoriques 12 et 14 définies par une première partie statorique 16.

Le stator 2 comprend également trois noyaux magnétiques 18, 19 et 20 portant respectivement trois bobines 22, 23 et 24, ainsi qu'une deuxième partie statorique 26 servant à la fermeture des circuits ou chemins magnétiques du transducteur décrit ici. La première partie statorique 16 définit des premier, deuxième et troisième pôles magnétiques 28, 29 et 30. Le pôle magnétique 28 est relié magnétiquement à la première extrémité 18a du noyau magnétique 18, alors que les pôles magnétiques 29 et 30 sont respectivement reliés aux premières extrémités 19a et 20a des noyaux magnétiques 19 et 20. Les deuxièmes extrémités 18b, 19b et 20b des noyaux respectifs 18, 19 et 20 sont reliés magnétiquement à la deuxième partie statorique 26.

Les premier et deuxième pôles magnétiques 28 et 29 sont isolés magnétiquement l'un de l'autre par deux isthmes 32 et 33 formant des zones à haute réluctance, alors que les deuxième et troisième pôles magnétiques 29 et 30 sont isolés magnétiquement l'un de l'autre par deux isthmes 34 et 35 formant des zones à haute réluctance. Deux encoches de positionnement 36 et 37, respectivement 38 et 39 sont prévues sur le bord de l'ouverture statorique 12, respectivement de l'ouverture statorique 14. Les deux isthmes 32 et 33 définissent une première direction 40 de couplage nul entre la bobine 22 et l'aimant permanent 42 du rotor 4. De même, les isthmes 34 et 35 définissent une deuxième direction 44 de couplage nul entre la bobine 24 et l'aimant permanent 46 du rotor 6.

On notera que les aimants permanents 42 et 46 sont des aimants bipolaires à aimantation radiale, ces aimants étant situés respectivement à l'intérieur des trous statoriques 12 et 14.

Le rotor 4 est couplé à un premier mobile 50 solidaire d'une première aiguille 52 et le deuxième rotor 6 est solidaire d'un deuxième mobile 54 coaxial au mobile 50 et solidaire d'une aiguille 56. On notera que les mobiles 50 et 54 sont placés de part et d'autre de la première partie statorique 16. De plus, les mobiles 50 et 54 sont de diamètres égaux. Le mobile 54 est relié à l'aiguille 56 au moyen d'un axe 58 pouvant tourner librement à l'intérieur d'un canon 60 solidaire du stator 2. Cet agencement particulier permet ainsi un entraînement indépendant des aiguilles 52 et 56 qui sont coaxiales en rotation.

Les encoches 36 et 37 définissent une première direction d'énergie minimale 64 pour l'aimant permanent 42, alors que les encoches 38 et 39 définissent une deuxième direction d'énergie minimale 66 pour l'aimant permanent 46. La première direction de couplage nul 40 et la première direction d'énergie nul 64, respectivement la deuxième direction de couplage nul 44 et la deuxième direction d'énergie minimale 66 présentent un décalage angulaire α non nul. On notera que l'angle β entre la direction géométrique définie par les isthmes 32 et 33, respectivement 34 et 35 et la direction géométrique définie par les encoches 36 et 37, respectivement 38 et 39, à une valeur sensiblement égale à celle de l'angle α. Dans le mode de réalisation décrit ici, la valeur de l'angle α est quelque peu inférieure à celle de l'angle β.

Les bobines 22 et 24 sont reliées à des moyens d'alimentation 70, la bobine 23 étant reliée à des moyens de détection 72 de la rotation du rotor 4 ou du rotor 6 suivant que l'un ou l'autre de ces rotors est actionné. Les moyens de détection 72 sont reliés électriquement aux moyens d'alimentation 70 pour permettre le passage de signaux électriques entre les moyens de détection 72 et les moyens d'alimentation 70, ce qui est schématisé sur la figure 1 par le trait de liaison électrique 74.

On décrira maintenant plus en détail le fonctionnement du transducteur décrit ci-avant et la manière dont ce transducteur est commandé. On distinguera essentiellement quatre modes de fonctionnement. Le premier mode de fonctionnement est le mode pas à pas dans le sens de rotation avant de l'un ou l'autre des deux rotors 4 et 6. Le deuxième mode de fonctionnement est le mode pas à pas dans le sens de rotation arrière de l'un ou l'autre des deux rotors 4 et 6. Le troisième mode de fonctionnement est un mode de fonctionnement rapide ou continu (aussi mentionné mode de fonctionnement accéléré) dans le sens de rotation avant de l'un ou l'autre des deux rotors 4 et 6. Le quatrième mode de fonctionnement est le mode de fonctionnement rapide ou continu dans le sens de rotation arrière de l'un ou l'autre des rotors 4 et 6.

Les sens de rotation avant et arrière des rotors 4 et 6 sont définis par la structure du transducteur décrite ci-avant. Dans le mode de réalisation décrit ici, le sens avant correspond à un sens de rotation positif, c'est-à-dire au sens contraire aux aiguilles d'une montre. Par conséquent, le sens de rotation arrière est un sens de rotation négatif correspondant au sens de rotation des aiguilles d'une montre.

La structure du transducteur décrite ci-avant permet de faire avancer l'un ou l'autre des deux rotors en avant dans un mode pas à pas à l'aide d'une seule impulsion fournie par la bobine d'alimentation respective, alors qu'il est nécessaire d'effectuer un balancement de ce rotor pour entraîner celui-ci dans un sens de rotation arrière, ce qui nécessite généralement une alimentation sous forme de trois impulsions successives comme cela sera décrit plus précisément par la suite de la présente description.

Dans le mode de fonctionnement pas à pas en avant, la bobine 22 est alimentée de manière connue avec des impulsions successives de polarité alternée pour entraîner en rotation le rotor 4. Pour entraîner en rotation le rotor 6, la bobine 24 est alimentée de manière similaire.

Selon une variante de réalisation, la bobine 23 et les moyens de détection 72 ne sont pas utilisés dans ce mode de fonctionnement. Dans une autre variante, les moyens de détection 72 sont agencés pour analyser un signal de tension induite dans la bobine 23 lors de la rotation du rotor 4 ou 6 actionné sélectivement. L'analyse du signal de tension induite susmentionné est effectuée de manière à déterminer le comportement de l'aimant permanent du rotor actionné à chaque pas pour détecter si la rotation a eu lieu ou s'il est probable qu'elle n'ait pas eu lieu. L'homme du métier sait faire une telle analyse à l'aide de moyens de détection associés à la bobine d'alimentation. Dans le présent cas, l'analyse est effectuée sur un signal de tension induite (ou de courant induit) récolté par une bobine auxiliaire, à savoir la bobine 23. Cependant, l'agencement et la conception électronique des moyens de détection 72 pour effectuer l'analyse mentionnée ici sont similaires à ceux qui sont connus de l'homme du métier susmentionné.

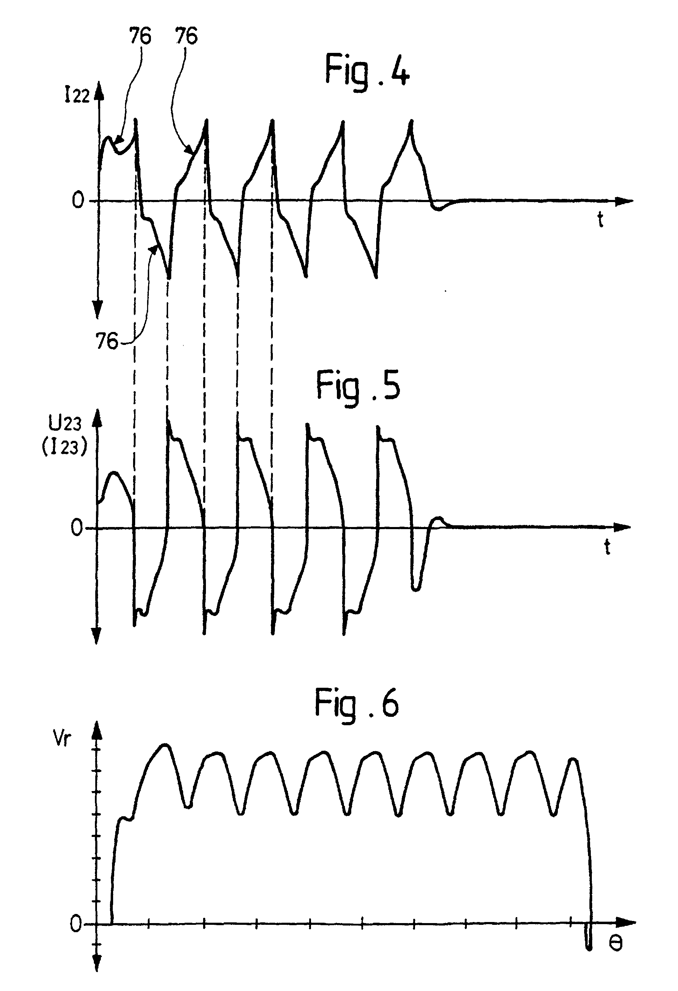

Les figures 4 à 6 décrivent schématiquement le fonctionnement du transducteur dans un mode rapide ou continu en avant. Comme cela a déjà été mentionné, le rotor 4 est entraîné dans le sens de rotation avant par une succession d'impulsions de polarité alternée où chacune de ces impulsions entraîne en rotation le rotor d'un pas, dans le présent cas d'un angle de 180°. Ci-après, le fonctionnement du transducteur dans le mode rapide ou continu en avant sera décrit pour le rotor 4, l'entraînement du rotor 6 dans ce mode de fonctionnement étant identique en utilisant la bobine d'alimentation 24 à la place de la bobine d'alimentation 22.

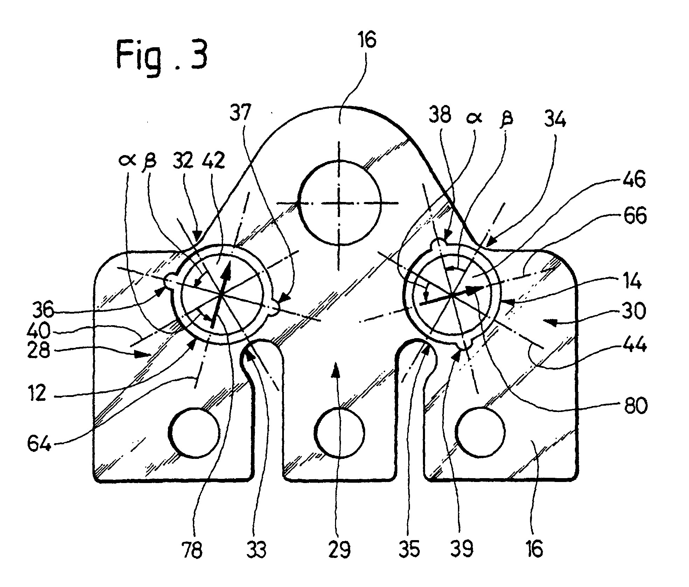

Sur la figure 4 est représenté le courant d'alimentation I22 fourni par les moyens d'alimentation 70 à la bobine 22. Par courant l'alimentation, on comprend le courant circulant dans la bobine résultant de la tension d'alimentation appliquée à cette bobine. Ce courant d'alimentation présente une succession d'impulsions 76 de polarité alternée et de forme sensiblement semblable. La figure 5 représente la tension induite U23 (ou de manière équivalente le courant induit I23) dans la bobine 23 en fonction du temps. Selon l'invention, la polarité de la tension d'alimentation est inversée chaque fois que la tension induite U23 (ou le courant induit I23) a la valeur zéro, ce qui résulte dans une inversion de la polarité du courant d'alimentation I22. De ce fait, on assure que la succession des impulsions 76 du courant d'alimentation I22 est relativement optimale pour assurer de manière sûre et efficace une marche rapide ou continue. En effet, le passage par zéro de la tension induite U23 correspond sensiblement à un alignement de l'axe d'aimantation 78 de l'aimant permanent 42 sur la direction de couplage nul 40. Comme cela se voit à la figure 3, une telle commande permet d'assurer que le rotor 42 ait tourné de plus de 90° et qu'il ait franchi l'axe géométrique défini par les encoches 36 et 37. Ainsi, on assure que chaque impulsion entraîne le rotor 4 d'un pas; c'est-à-dire d'un angle de 180°. Ensuite, le changement de polarité de la tension d'alimentation est effectué sensiblement après que l'axe d'aimantation 78 de l'aimant permanent 42 soit aligné sur la direction d'énergie minimale 64. De ce fait, on assure une rotation continue ou quasi-continue du rotor 4 de manière fiable et homogène, ce qui permet aussi de diminuer la consommation de courant et d'augmenter le rendement du transducteur selon l'invention lorsqu'il fonctionne en mode rapide ou continu.

Une analyse identique s'applique à l'aimant permanent 46 dont l'axe d'aimantation est représenté par la flèche 80.

Sur la figure 6 est représentée la vitesse de rotation angulaire du rotor 4, et donc de l'aimant permanent 42 qui lui est solidaire, en fonction de la position angulaire θ de ce rotor 4 lors de l'avance rapide ou continu en avant. La courbe mesurée par le présent inventeur représentée à la figure 6 montre que la rotation s'effectue de manière continue à vitesse quasi-constante, ce qui est avantageux pour des raisons énergétiques et de rapidité, notamment dans le cas de l'entraînement d'une aiguille de montre, et pour rendre attractif le produit équipé de l'ensemble moteur selon l'invention.

Dans un mode de fonctionnement pas à pas en arrière, il est connu de l'homme du métier, dans le cas d'un simple moteur monophasé à un rotor, d'obtenir une rotation en sens arrière par une technique dite de balancement nécessitant une alimentation sous forme de trois impulsions successives. La première impulsion d'alimentation sert à entraîner dans le sens positif le rotor sur un parcours angulaire inférieur à 90°. Ensuite, une deuxième impulsion d'alimentation est fournie avec une polarité inverse permettant ainsi l'entraînement dans le sens de rotation arrière. Finalement, une troisième impulsion d'alimentation de polarité identique à la première impulsion est fournie à la bobine d'alimentation de manière à assurer le passage d'un pas en sens arrière.

Dans ce mode de fonctionnement pas à pas en arrière, la bobine 23 reliée aux moyens de détection 72 peut avantageusement être utilisée pour déterminer la fin de la deuxième impulsion et également le début de la troisième impulsion. On notera qu'il est avantageux pour des raisons de fiabilité de l'entraînement en sens de rotation arrière, que la deuxième impulsion soit de durée suffisante pour que l'axe d'aimantation de l'aimant permanent du rotor sélectionné dépasse la direction de couplage nul susmentionnée et qu'elle ne soit pas trop longue, c'est-à-dire que la durée de la deuxième impulsion ne soit pas suffisamment longue pour permettre à l'axe d'aimantation de l'aimant permanent du rotor sélectionné de s'aligner de manière quasi-statique sur la direction de couplage nul susmentionnée. Pour satisfaire correctement à ces conditions, il est prévu selon l'invention, dans une variante de réalisation, de détecter le passage par zéro de la tension induite dans la bobine 23 durant la période de temps pendant laquelle la deuxième impulsion d'alimentation est engendrée par les moyens d'alimentation 70. Lorsque la tension induite dans la bobine 23 passe par zéro au cours de la période susmentionnée, la tension d'alimentation est inversée, mettant ainsi fin à la deuxième impulsion pour engendrer la troisième impulsion susmentionnée. De ce fait, on assure la rotation pas à pas en sens de rotation arrière de l'un ou l'autre des rotors 4 et 6.

On mentionnera que pour des raisons de sécurité accrue, tout passage par zéro de la tension induite durant une période égale à environ deux fois la durée de la première impulsion, à compter depuis le début de la première impulsion, reste sans influence sur la commande de l'alimentation des bobines d'alimentation 22 ou 24. En effet, la désaccélération et l'accélération de l'aimant permanent du rotor entraîné et notamment le changement de sens de rotation à la suite de la fin de la première impulsion peuvent engendrer un passage par zéro de la tension induite dans la bobine 23. Ainsi, pour pallier à cette éventualité, une fenêtre temporelle initiale est prévue durant laquelle les moyens de détection des passages par zéro de la tension induite sont inactifs.

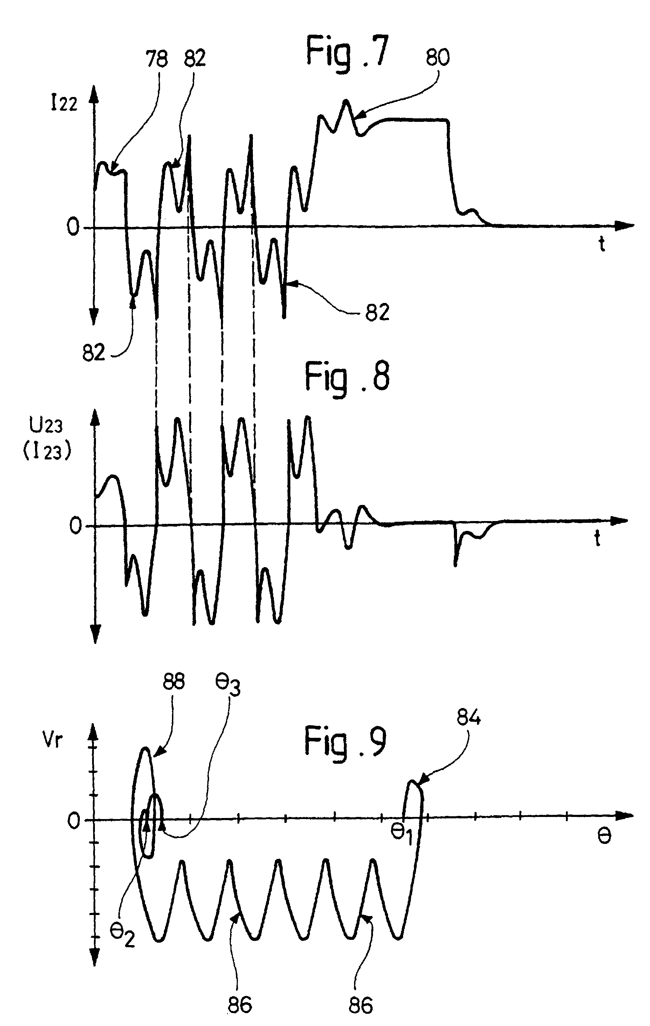

Sur les figures 7 à 9 est représenté schématiquement un mode de fonctionnement rapide ou continu en arrière de l'un ou l'autre des deux rotors 4 et 6 actionnés sélectivement. A nouveau, pour des raisons de simplification, on considérera l'entraînement du rotor 4 dans ce mode de fonctionnement rapide ou continu en arrière, l'entraînement du rotor 6 étant similaire avec la bobine d'alimentation 24 à la place de la bobine d'alimentation 22.

Sur la figure 7 est représenté le courant d'alimentation I22 en fonction du temps et sur la figure 8 la tension induite U23 (ou de manière équivalente le courant induit I23) dans la bobine 23 en fonction du temps. Le courant I22 présente une succession d'impulsions de polarité alternées. On différencie ici la première impulsion 78 et la dernière impulsion 80 des impulsions intermédiaires 82. De manière similaire au mode de fonctionnement pas à pas en arrière, la première impulsion 78 est une impulsion de balancement entraînant le rotor dans le sens avant. La durée de l'impulsion 78 est fixe et déterminée de manière à ce que l'entraînement en avant ne résulte pas dans l'avancement d'un pas en avant du rotor, ce qui aurait pour conséquence d'entraîner le rotor en sens avant au lieu de l'entraîner dans le sens arrière voulu.

L'homme du métier connaît ce problème et sait déterminer la durée de l'impulsion 78 et également les conditions de son application, notamment avec une impulsion de type hachée, pour assurer le balancement souhaité et le fonctionnement en sens arrière du rotor actionné. Suite à cette première impulsion 78, une succession d'impulsions 82 de polarité alternées sont fournies à la bobine d'alimentation 22. La durée de chacune des impulsions intermédiaires 82 est déterminée par le passage à zéro de la tension induite dans la bobine 23 comme cela est représenté aux figures 7 et 8. L'inversion de la polarité de la tension d'alimentation lorsque la tension induite dans la bobine 23, passe par zéro est prévue selon la présente invention pour des raisons équivalentes à celles mentionnées pour le mode de fonctionnement rapide ou continu en avant.

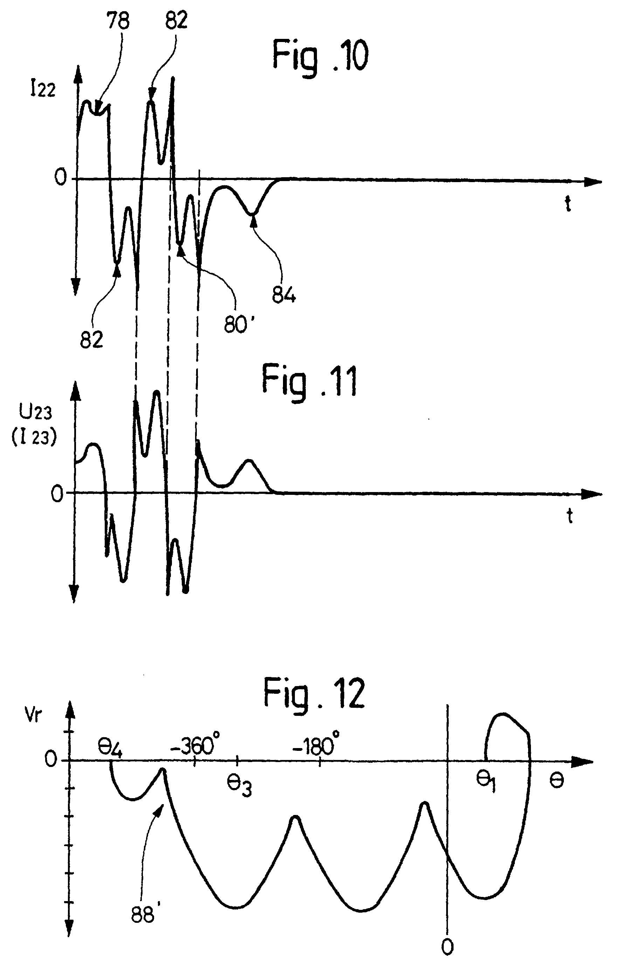

Si dans un mode de fonctionnement rapide ou continu en avant tel que décrit précédemment, le nombre de pas désiré est obtenu correctement et de manière sûre avec une dernière impulsion de longueur sensiblement équivalente à l'impulsion qui la précède, l'inventeur a constaté qu'il n'en est pas de même lors d'un fonctionnement rapide ou continu en arrière. Ceci provient du fait que, dans le sens de rotation avant, l'aimant permanent devrait subir une rotation supérieure à 90° suite à la dernière impulsion pour effectuer un pas de rotation supplémentaire, ce qui n'intervient pas étant donné qu'il n'a pas encore dépassé la direction d'énergie minimale finale à la fin de la dernière impulsion. Par contre, dans le sens de rotation arrière, une dernière impulsion de durée sensiblement équivalente à celle qui la précède peut entraîner l'aimant permanent au-delà de la position d'énergie minimale finale prévue, l'angle restant à parcourir pour effectuer un pas supplémentaire étant inférieur à 90°. Ainsi, la dernière impulsion 80 fournie par les moyens d'alimentation à la bobine d'alimentation est supérieure à la durée de l'impulsion qui la précède. Ceci sera expliqué ci-après plus en détail à l'aide des figures 10 à 15.

Sur la figure 9 est représentée la vitesse angulaire Vr du rotor actionné en fonction de la position angulaire θ de ce rotor. On se rappellera que le sens de rotation arrière correspond à un sens de rotation négatif. Ainsi, sur la figure 9, le rotor actionné part de la position angulaire θ1. Comme cela est expliqué précédemment, on voit sur la figure 9 que le rotor tourne premièrement dans un sens positif sur une première partie 84 de la courbe, puis dans un sens de rotation négatif sur une deuxième partie 86 de cette courbe. En fin de rotation, correspondant à la dernière partie 88 de la courbe représentée à la figure 9, le rotor subit une oscillation. Comme cela est visible sur la partie 88 de la courbe de la figure 9, la dernière impulsion 80 est relativement longue, le rotor s'arrêtant premièrement dans une première position θ2 correspondant à la direction de couplage nul décrite ci-avant, puis à la fin de la dernière impulsion 80 le rotor vient dans sa position finale θ3 correspondant à la direction d'énergie minimale susmentionnée.

A l'aide des figures 10 à 15, on décrira le problème du pas supplémentaire final lors d'un fonctionnement rapide ou continu en arrière et la solution proposée par la présente invention, comme déjà mentionné ci-avant.

Les figures 10 à 12 décrivent respectivement les mêmes variables que les figures 7 à 9. Pour des raisons de simplification, seule la commande de deux pas en mode rapide arrière est décrite ici. Comme cela ressort des figures 10 et 11, la dernière impulsion 80' est également terminée par le passage à zéro de la tension induite U23. Ainsi, la durée de l'impulsion 80' est sensiblement égale à la durée de l'impulsion 82 qui la précède. On notera que le courant induit de freinage 84 est sans importance dans les considérations présentes. Une commande en alimentation selon les figures 10 et 11 conduit au passage d'un pas supplémentaire non prévu comme cela ressort clairement de l'analyse de la figure 12. En effet, la partie terminale 88' de la courbe représentée ne décrit pas une oscillation du rotor avec un retour dans la position finale θ3 prévue, mais la position finale du rotor est θ4 qui correspond à une rotation supplémentaire de 180°.

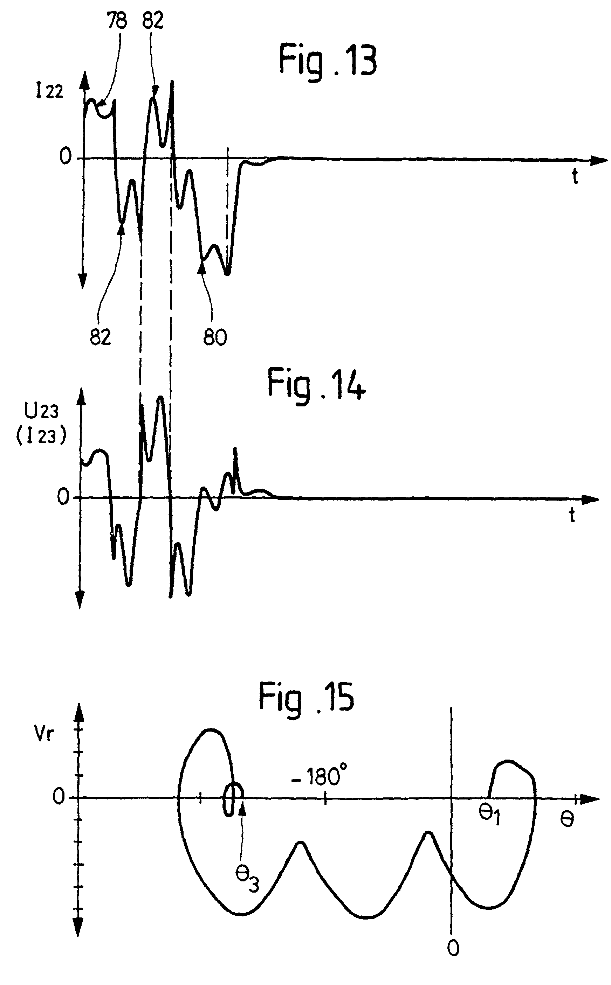

Pour pallier l'inconvénient majeur susmentionné, il est prévu selon l'invention d'augmenter la durée de la dernière impulsion, ce qui conduit à garantir un comportement correct du rotor qui effectue exactement le nombre de pas de rotation désiré. A nouveau, les variables représentées sur les figures 13 à 15 sont respectivement identiques à celles représentées aux figures 7 à 9. Les références déjà décrites ne seront pas à nouveau décrites ici.

Comme cela est représenté schématiquement à la figure 13, la dernière impulsion d'alimentation 80 présente une durée sensiblement double à celle de l'impulsion 82 qui la précède, la durée de la dernière impulsion 80 étant fixée dans la commande du transducteur comprise dans les moyens d'alimentation 70. L'analyse de la courbe de la figure 15 résultant de l'alimentation selon les figures 13 et 14 montre que seul deux pas de 180° ont été effectués, le rotor finissant sa rotation dans la position angulaire θ3 souhaitée. On notera que, contrairement à la figure 9, le rotor ne marque pas un arrêt avec l'axe d'aimantation aligné sur la direction de couplage nul correspondant à θ2 sur la figure 9.

Selon l'analyse des résultats obtenus par l'inventeur, une durée de la dernière impulsion 80 égale à 1.5 fois la durée de l'impulsion précédente est suffisant pour un comportement correct du rotor en fin de rotation. Toutefois, pour des raisons de sécurité, il est proposé, dans une variante préférée de réalisation, que la durée de la dernière impulsion 80 est au moins deux fois plus longues que la durée de l'impulsion 82 qui la précède.

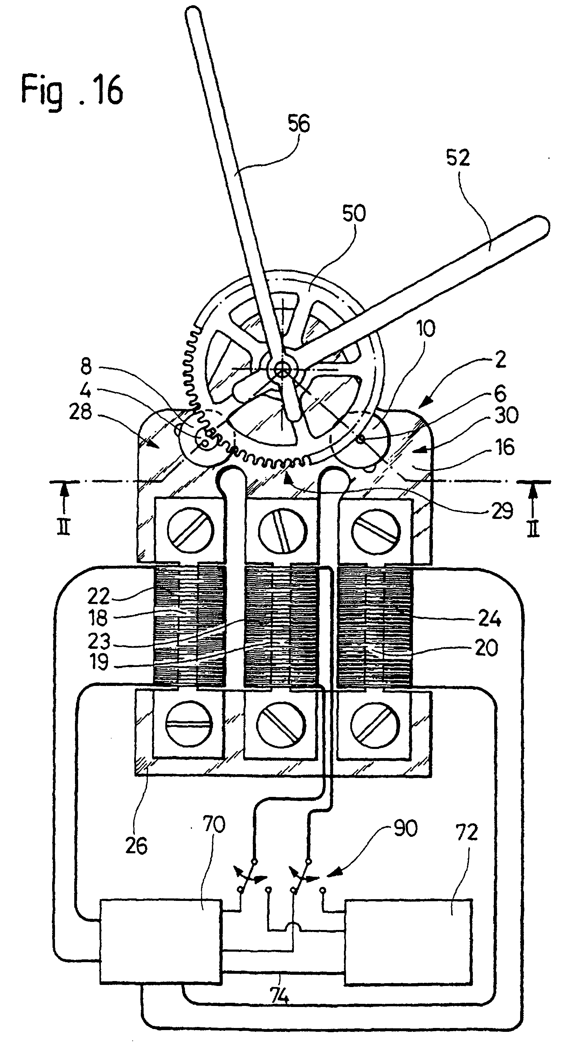

A l'aide de la figure 16, on décrira ci-après un deuxième mode de réalisation d'un transducteur selon l'invention. Les références déjà décrites à l'aide des figures 1 à 3 ne seront pas décrites à nouveau ici en détail. Le transducteur selon le deuxième mode de réalisation diffère de celui du premier mode de réalisation décrit précédemment en ce que la bobine 23, qui est associée au pôle magnétique 29 commun aux deux rotors 4 et 6, peut être sélectivement connectée soit aux moyens d'alimentation 70, soit aux moyens de détection 72 à l'aide d'un interrupteur 90 représenté schématiquement sur la figure 16.

Dans une variante, il est prévu de connecter la deuxième bobine aux moyens d'alimentation 70 lorsqu'un mode de fonctionnement pas à pas avant est prévu. Dans une première variante, la bobine 23 est reliée en parallèle à la bobine d'alimentation 22 ou 24 suivant que le rotor 4 ou 6 est actionné sélectivement alors que la bobine d'alimentation 24 ou 22 non alimentée est court-circuitée. Dans une deuxième variante, la bobine 23 est reliée en série soit à la bobine 22, soit à la bobine 24 suivant que le rotor 4 ou 6 est actionné sélectivement alors que la bobine d'alimentation 24 ou 22 non alimentée est court-circuitée. Ainsi, il est possible d'utiliser la bobine 23 en alimentation pour entraîner en rotation soit le rotor 4, soit le rotor 6.

Dans un mode de fonctionnement pas à pas en sens de rotation arrière, il est possible de relier la bobine 23 aux moyens d'alimentation 70 et, dans une autre variante, de relier la bobine 23 aux moyens de détection 72 pour utiliser la bobine 23 et ces moyens de détection 72 de manière similaire à ce qui a été décrit pour le premier mode de réalisation dans un mode de fonctionnement pas à pas en arrière.

Dans un mode de fonctionnement rapide ou continu, la bobine 23 est reliée aux moyens de détection 72 et joue un rôle équivalent à celui décrit dans le premier mode de réalisation pour le mode de fonctionnement rapide ou continu en avant ou en arrière.

Finalement, on mentionnera que bien évidemment les moyens de détection 72 sont agencés pour fournir aux moyens d'alimentation 70 des signaux d'entrée, et notamment un signal d'entrée lorsque la tension induite dans la bobine 23 passe par zéro. Les moyens de détection 72 ne sont pas limités à la détection du passage par zéro de la tension induite (ou du courant induit) dans la bobine 23, mais peuvent également permettre la détection d'autres informations relatives à cette tension induite ou ce courant induit, comme c'est notamment le cas pour la détection de pas ratés.

## Revendications

1. Transducteur électromécanique comprenant un stator (2) et des premier et deuxième rotors (4 et 6) comportant respectivement des premier et deuxième aimants permanents bipolaires (42 et 46) à aimantation radiale, ledit stator définissant des premier et deuxième trous statoriques (12 et 14) à l'intérieur desquels sont respectivement situés lesdits premier et deuxième aimants permanents, ce stator comprenant une première partie (16) définissant des premier, deuxième et troisième pôles magnétiques (28, 29, 30), **caractérisé en ce que** lesdits premier et deuxième pôles magnétiques définissent intégralement ledit premier trou statorique (12) et lesdits deuxième et troisième pôles magnétiques définissent intégralement ledit deuxième trou statorique 14, lesdits premier, deuxième et troisième pôles magnétiques (28,29,30) étant respectivement reliés aux premières extrémités (18a, 19a, 20a) de premier, deuxième et troisième noyaux magnétiques (18, 19, 20) portant respectivement des première, deuxième et troisième bobines (22, 23, 24), une deuxième partie (26) du stator servant à la fermeture des circuits magnétiques dudit transducteur étant reliée aux deuxièmes extrémités (18b, 19b, 20b) desdits premier, deuxième et troisième noyaux magnétiques (18,19,20), les première et deuxième parties statoriques (16,26) n'étant reliées magnétiquement que par ces noyaux magnétiques (18,19,20), lesdites bobines étant susceptibles d'être alimentées pour commander indépendamment lesdits premier et deuxième rotors, soit dans un mode de fonctionnement pas à pas, soit dans un mode de fonctionnement accéléré ou continu.

2. Transducteur selon la revendication 1, dans lequel lesdits premier et deuxième pôles magnétiques (28 et 29) sont magnétiquement isolés l'un de l'autre par deux premier isthmes (32, 33), lesdits deuxième et troisième pôles magnétiques (29 et 30) étant magnétiquement isolés l'un de l'autre par deux deuxièmes isthmes (34, 35), deux premières encoches de positionnement (36, 37) étant agencées sur le bord dudit premier trou statorique (12) de manière à définir une direction d'énergie minimale (64) pour l'axe magnétique (78) dudit premier aimant permanent (42), deux deuxièmes encoches de positionnement (38, 39) étant également agencées sur le bord dudit deuxième trou statorique (14) de manière à définir une deuxième direction d'énergie minimale (66) pour l'axe magnétique (80) dudit deuxième aimant permanent (46).

3. Transducteur selon la revendication 2, dans lequel lesdits premiers isthmes (32, 33) définissent une première direction (40) de couplage nul entre ladite première bobine (22) et ledit premier aimant permanent (42) lorsque l'axe magnétique de ce premier aimant permanent est aligné sur cette première direction, lesdits deuxièmes isthmes (34, 35) définissant également une deuxième direction (44) de couplage nul entre ladite troisième bobine (24) et ledit deuxième aimant permanent (46) lorsque l'axe magnétique (80) de ce deuxième aimant permanent est aligné sur cette deuxième direction, lesdites première et deuxième directions de couplage nul présentant respectivement un décalage angulaire non nul avec lesdits première et deuxième directions d'énergie minimale.

4. Transducteur selon l'une des revendications précédentes, dans lequel lesdits premier et deuxième rotors (4 et 6) sont mécaniquement couplés à des premier et deuxième mobiles coaxiaux (50, 54), disposés de part et d'autre de ladite première partie dudit stator (16).

5. Transducteur selon l'une des revendications précédentes, dans lequel lesdites première et troisième bobines (22 et 24) sont reliées à des moyens d'alimentation (70) agencés pour alimenter ces première et troisième bobines de manière à actionner respectivement lesdits premier et deuxième rotors (4 et 6).

6. Transducteur selon la revendication 5, dans lequel ladite deuxième bobine (23) est connectée à des moyens de détection (72) de la rotation dudit premier rotor ou dudit deuxième rotor.

7. Transducteur selon la revendication 6, dans lequel lesdits moyens de détection (72) sont agencés pour détecter chaque pas manqué ou raté dudit premier rotor (4) ou dudit deuxième rotor (6) actionné sélectivement dans un mode de fonctionnement pas à pas par lesdits moyens d'alimentation (70) qui sont agencés pour permettre ce mode de fonctionnement pas à pas pour lesdits premier et deuxième rotors.

8. Transducteur selon la revendication 6 ou 7, dans lequel lesdits moyens de détection (72) sont agencés pour détecter les passages par zéro de la tension induite (U23) dans ladite deuxième bobine (23) lorsque lesdits premier et deuxième rotors (4 et 6) sont sélectivement actionnés dans un mode de fonctionnement rapide ou continu par lesdits moyens d'alimentation (70) qui sont agencés pour permettre un fonctionnement rapide ou continu desdits premier et deuxième rotors, lesdits moyens de détection étant reliés électriquement auxdits moyens d'alimentation auxquels ils fournissent un signal d'entrée lorsque ladite tension induite passe par zéro, ces moyens d'alimentation étant agencés pour pouvoir inverser la polarité de la tension d'alimentation lorsqu'ils reçoivent undit signal d'entrée.

9. Transducteur selon la revendication 8, dans lequel lesdits moyens d'alimentation (70) sont agencés pour permettre un mode de fonctionnement rapide ou continu dans les deux sens de rotation de chacun desdits premier et deuxième rotors.

10. Transducteur selon la revendication 9, dans lequel, lorsqu'un mode de fonctionnement rapide ou continu dans un sens avant est activé, les moyens d'alimentation (70) sont agencés de manière que la polarité de la tension d'alimentation est inversée chaque fois qu'est reçu undit signal d'entrée.

11. Transducteur selon la revendication 9 ou 10, dans lequel, lorsqu'un desdits premier et deuxième rotors (4, 6) est actionné en mode de fonctionnement rapide ou continu selon un sens de rotation arrière, lesdits signaux d'entrée reçus durant un intervalle de temps initial supérieur à la durée d'une première impulsion reste sans effet sur l'alimentation du transducteur, la dernière impulsion fournie avant l'arrêt du rotor actionné étant d'une durée supérieure à l'impulsion qui la précède.

12. Transducteur selon la revendication 11, dans lequel ladite dernière impulsion est au moins sensiblement deux fois plus longue que ladite impulsion qui la précède.

13. Transducteur selon la revendication 5, dans lequel ladite deuxième bobine (23) peut sélectivement être connectée auxdits moyens d'alimentation (70) pour recevoir un courant d'alimentation ou à des moyens de détection de la rotation dudit premier rotor (4) et dudit deuxième rotor (6) actionnés sélectivement.

14. Transducteur selon la revendication 13, dans lequel, lorsque ladite deuxième bobine (23) est connectée auxdits moyens d'alimentation, cette deuxième bobine est reliée électriquement en série avec ladite première bobine (22) lorsque ledit premier rotor (4) est actionné en rotation, ladite troisième bobine (24) étant alors mise en court-circuit, et avec ladite troisième bobine lorsque ledit deuxième rotor (6) est actionné en rotation, ladite première bobine étant alors mise en court-circuit.

15. Transducteur selon la revendication 12, dans lequel, lorsque la deuxième bobine (23) est connectée auxdits moyens d'alimentation, cette deuxième bobine est reliée électriquement en parallèle avec ladite première bobine (22) lorsque ledit premier rotor (4) est actionné en rotation, ladite troisième bobine (24) étant alors mise en court-circuit, et avec ladite troisième bobine lorsque ledit deuxième rotor (6) est actionné en rotation, ladite première bobine étant alors mise en court-circuit.

16. Transducteur selon l'une des revendications 13 à 15, dans lequel lesdits moyens d'alimentation (70) sont agencés pour permettre un mode de fonctionnement pas à pas et un mode de fonctionnement rapide ou continu de ce transducteur, ladite deuxième bobine (23) étant connectée auxdits moyens d'alimentation lorsqu'un mode de fonctionnement pas à pas est activé et auxdits moyens de détection (72) lorsqu'un mode de fonctionnement rapide ou continu est activé.

17. Transducteur selon la revendication 16, dans lequel, lorsqu'un mode de fonctionnement rapide ou continu est activé, lesdits moyens de détection (72) sont agencés pour détecter les passages par zéro de la tension induite (U23) dans ladite deuxième bobine (23) lorsque l'un ou l'autre desdits premier et deuxième rotors est actionné, lesdits moyens de détection étant reliés électriquement auxdits moyens d'alimentation (70) auxquels ils fournissent un signal d'entrée à chaque passage par zéro de ladite tension induite, ces moyens d'alimentation étant agencés pour pouvoir inverser la polarité de la tension d'alimentation lorsqu'ils reçoivent undit signal d'entrée.

18. Transducteur selon la revendication 17, dans lequel lesdits moyens d'alimentation (70) sont agencés pour permettre un mode de fonctionnement rapide ou continu dans les deux sens de rotation de chacun desdits premier et deuxième rotors.

19. Transducteur selon la revendication 18, dans lequel, lorsqu'un mode de fonctionnement rapide ou continu dans un sens avant est activé, les moyens d'alimentation (70) sont agencés de manière que la polarité de la tension d'alimentation est inversée chaque fois qu'est reçu undit signal d'entrée.

20. Transducteur selon la revendication 18 ou 19, dans lequel, lorsqu'un desdits premier et deuxième rotors (4 et 6) est actionné en mode de fonctionnement rapide ou continu selon un sens de rotation arrière, lesdits signaux d'entrée reçus durant un intervalle de temps initial supérieur à la durée d'une première impulsion reste sans effet sur l'alimentation du transducteur, la dernière impulsion fournie avant l'arrêt du rotor actionné étant d'une durée supérieure à l'impulsion qui la précède.

21. Transducteur selon la revendication 20, dans lequel ladite dernière impulsion est au moins sensiblement deux fois plus longue que ladite impulsion qui la précède.

## Patentansprüche

1. Elektromechanischer Wandler, der einen Stator (2) und erste und zweite Rotoren (4 und 6), die erste und zweite bipolare Permanentmagneten (42 und 46) mit radialer Magnetisierung aufweisen, umfaßt, wobei der Stator erste und zweite Statortöcher (12 und 14) definiert, in denen sich die ersten bzw. zweiten Permanentmagneten befinden, wobei dieser Stator einen ersten Teil (16) umfaßt, der erste, zweite und dritte Magnetpole (28, 29, 30) definiert, **dadurch gekennzeichnet, daß** die ersten und zweiten Magnetpole zusammen das erste Statorloch (12) definieren und die zweiten und dritten Magnetpole zusammen das zweite Statorloch (14) definieren, wobei die ersten, zweiten und dritten Magnetpole (28, 29, 30) mit den ersten Enden (18a, 19a, 20a) von ersten, zweiten bzw. dritten Magnetkeme (18, 19, 20) verbunden sind, die erste, zweite bzw. dritte Spulen (22, 23, 24) tragen, wobei ein zweiter Teil (26) des Stators, der dem Schließen der Magnetkreise des Wandlers dient, mit den zweiten Enden (18b, 19b, 20b) der ersten, zweiten bzw. dritten Magnetkerne (18, 19, 20) verbunden ist, wobei die ersten und zweiten Statorteile (16, 26) nur über diese Magnetkeme (18, 19, 20) magnetisch verbunden sind und die Spulen gespeist werden können, um die ersten und zweiten Rotoren unabhängig entweder in einer Schrittbetriebsart oder in einer beschleunigten oder Dauerbetriebsart zu steuern.

2. Wandler nach Anspruch 1, in dem die ersten und zweiten Magnetpole (28 und 29) durch zwei erste Engstellen (32, 33) magnetisch voneinander isoliert sind und die zweiten und dritten Magnetpole (29 und 30) durch zwei zweite Engstellen (34, 35) magnetisch voneinander isoliert sind, wobei zwei erste Positionierungskerben (36, 37) am Rand des ersten Statorlochs (12) in der Weise angeordnet sind, daß eine Richtung (64) minimaler Energie für die magnetische Achse (78) des ersten Permanentmagneten (42) definiert wird, und zwei zweite Positionierungskerben (38, 39) ebenfalls am Rand des zweiten Statorlochs (14) in der Weise angeordnet sind, daß eine zweite Richtung (66) minimaler Energie für die magnetische Achse (80) des zweiten Permanentmagneten (46) definiert wird.

3. Wandler nach Anspruch 2, in dem die ersten Engstellen (32, 33) eine erste Richtung (40) mit Kopplung null zwischen der ersten Spule (22) und dem ersten Permanentmagneten (42) definieren, wenn die magnetische Achse dieses ersten Permanentmagneten auf diese erste Richtung ausgerichtet ist, und die zweiten Engstellen (34, 35) ebenfalls eine zweite Richtung (44) mit Kopplung null zwischen der dritten Spule (24) und dem zweiten Permanentmagneten (46) definieren, wenn die magnetische Achse (80) dieses zweiten Permanentmagneten auf diese zweite Richtung ausgerichtet ist, wobei die ersten und zweiten Richtungen mit Kopplung null eine von null verschiedene Winkelverschiebung zu den ersten und zweiten Richtungen minimaler Energie aufweisen.

4. Wandler nach einem der vorhergehenden Ansprüche, in dem die ersten und zweiten Rotoren (4 und 6) mit ersten und zweiten koaxialen, beweglichen Elementen (50, 54), die beiderseits des ersten Teils des Stators (16) angeordnet sind, mechanisch gekoppelt sind.

5. Wandler nach einem der vorhergehenden Ansprüche, in dem die ersten und dritten Spulen (22 und 24) mit Speisungsmitteln (70) verbunden sind, die so beschaffen sind, daß sie diese ersten und dritten Spulen speisen, um die ersten bzw. zweiten Rotoren (4 und 6) zu betätigen.

6. Wandler nach Anspruch 5, in dem die zweite Spule (23) mit Mitteln (72) für die Erfassung der Drehung des ersten Rotors oder des zweiten Rotors verbunden ist.

7. Wandler nach Anspruch 6, in dem die Erfassungsmittel (72) so beschaffen sind, daß sie jeden fehlenden oder aussetzenden Schritt des ersten Rotors (4) oder des zweiten Rotors (6), der von den Speisungsmitteln (70) wahlweise in einer Schrittbetriebsart betätigt wird, erfassen, wobei die Speisungsmittel (70) so beschaffen sind, daß sie diese Schrittbetriebsart für die ersten und zweiten Rotoren ermöglichen.

8. Wandler nach Anspruch 6 oder 7, in dem die Erfassungsmittel (72) so beschaffen sind, daß sie die Nulldurchgänge der Spannung (U23) erfassen, die in der zweiten Spule (23) induziert wird, wenn die ersten und zweiten Rotoren (4 und 6) wahlweise in einer schnellen oder Dauerbetriebsart von den Speisungsmitteln (70) betätigt werden, wobei die Speisungsmittel (70) so beschaffen sind, daß sie einen schnellen oder Dauerbetrieb der ersten und zweiten Rotoren ermöglichen, wobei die Erfassungsmittel mit den Speisungsmitteln, an die sie ein Eingangssignal liefern, wenn die induzierte Spannung durch Null geht, elektrisch verbunden sind, wobei diese Speisungsmittel so beschaffen sind, daß sie die Polarität der Speisespannung umkehren, wenn sie ein solches Eingangssignal empfangen.

9. Wandler nach Anspruch 8, in dem die Speisungsmittel (70) so beschaffen sind, daß sie eine schnelle oder Dauerbetriebsart in den beiden Drehrichtungen jedes der ersten und zweiten Rotoren ermöglichen.

10. Wandler nach Anspruch 9, in dem die Speisungsmittel (70) dann, wenn eine schnelle oder Dauerbetriebsart in einer Vorwärtsrichtung aktiviert ist, so beschaffen sind, daß die Polarität der Speisespannung jedesmal umgekehrt wird, wenn ein solches Eingangssignal empfangen wird.

11. Wandler nach Anspruch 9 oder 10, in dem dann, wenn einer der ersten und zweiten Rotoren (4, 6) in einer schnellen oder Dauerbetriebsart in einer Rückwärtsdrehrichtung betätigt wird, die Eingangssignale, die während eines anfänglichen Zeitintervalls, das größer als die Dauer eines ersten Impulses ist, empfangen werden, ohne Wirkung für die Speisung des Wandlers bleiben, wobei der letzte Impuls, der vor dem Anhalten des betätigten Rotors geliefert wird, eine Dauer besitzt, die größer ist als jene des ihm vorhergehenden Impulses.

12. Wandler nach Anspruch 11, in dem der letzte Impuls wenigstens im wesentlichen gleich doppelt so lang wie der ihm vorhergehende Impuls ist.

13. Wandler nach Anspruch 5, in dem die zweite Spule (23) wahlweise mit den Speisungsmitteln (70), um einen Speisestrom zu empfangen, oder mit den Mitteln für die Erfassung der Drehung des ersten Rotors (4) und des zweiten Rotors (6), die wahlweise betätigt werden, verbunden werden kann.

14. Wandler nach Anspruch 13, in dem dann, wenn die zweite Spule (23) mit den Speisungsmitteln verbunden ist, diese zweite Spule mit der ersten Spule (22) elektrisch in Reihe geschaltet ist, wenn der erste Rotor (4) rotatorisch betätigt wird, wobei dann die dritte Spule (24) kurzgeschlossen ist, und mit der dritten Spule elektrisch in Reihe geschaltet ist, wenn der zweite Rotor (6) rotatorisch betätigt wird, wobei dann die erste Spule kurzgeschlossen ist.

15. Wandler nach Anspruch 12, in dem dann, wenn die zweite Spule (23) mit den Speisungsmitteln verbunden ist, diese zweite Spule zu der ersten Spule (22) elektrisch parallel geschaltet ist, wenn der erste Rotor (4) rotatorisch betätigt wird, wobei dann die dritte Spule (24) kurzgeschlossen ist, und zu der dritten Spule elektrisch parallel geschaltet ist, wenn der zweite Rotor (4) rotatorisch betätigt wird, wobei dann die erste Spule kurzgeschlossen ist.

16. Wandler nach einem der Ansprüche 13 bis 15, in dem die Speisungsmittel (70) so beschaffen sind, daß sie eine Schrittbetriebsart und eine schnelle oder Dauerbetriebsart dieses Wandlers ermöglichen, wobei die zweite Spule (23) mit den Speisungsmitteln verbunden ist, wenn eine Schrittbetriebsart aktiviert ist, und mit den Erfassungsmitteln (72) verbunden ist, wenn eine schnelle oder Dauerbetriebsart aktiviert ist.

17. Wandler nach Anspruch 16, in dem dann, wenn eine schnelle oder Dauerbetriebsart aktiviert ist, die Erfassungsmittel (72) die Nulldurchgänge der Spannung (U23) erfassen können, die in der zweiten Spule (23) induziert wird, wenn der eine oder der andere der ersten oder zweiten Rotoren betätigt wird, wobei die Erfassungsmittel mit den Speisungsmitteln (70), an die sie bei jedem Nulldurchgang der induzierten Spannung ein Eingangssignal liefern, elektrisch verbunden sind, wobei diese Speisungsmittel die Polarität der Speisespannung umkehren können, wenn sie ein solches Eingangssignal empfangen.

18. Wandler nach Anspruch 17, in dem die Speisungsmittel (70) so beschaffen sind, daß sie eine schnelle oder Dauerbetriebsart in den beiden Drehrichtungen jedes der ersten und zweiten Rotoren ermöglichen.

19. Wandler nach Anspruch 18, in dem dann, wenn eine schnelle oder Dauerbetriebsart in Vorwärtsrichtung aktiviert ist, die Speisungsmittel (70) so beschaffen sind, daß sie die Polarität der Speisespannung jedesmal umkehren, wenn sie ein solches Eingangssignal empfangen.

20. Wandler nach Anspruch 18 oder 19, in dem dann, wenn die ersten und zweiten Rotoren (4 und 6) in der schnellen oder Dauerbetriebsart in einer Rückwärtsdrehrichtung betätigt werden, die Eingangssignale, die während eines anfänglichen Zeitintervalls empfangen werden, das größer als die Dauer eines ersten Impulses ist, ohne Wirkung auf die Speisung des Wandlers bleiben, wobei der letzte gelieferte Impuls vor dem Anhalten des betätigten Rotors eine Dauer besitzt, die größer als jene des ihm vorhergehenden Impulses ist.

21. Wandler nach Anspruch 20, in dem der letzte Impuls wenigstens im wesentlichen gleich doppelt so lang wie der ihm vorhergehende Impuls ist.

## Claims

1. Electromechanical transducer comprising a stator (2) and first and second rotors (4 and 6) including respectively first and second bipolar permanent magnets (42 and 46) having radial magnetisation, said stator defining first and second stator holes (12 and 14) within which are respectively situated said first and second permanent magnets, this stator comprising a first part (16) defining first, second and third magnetic poles (28, 29, 30), **characterized in that** said first and second magnetic poles entirely define said first stator hole (12) and said second and third magnetic poles entirely define said second stator hole (14), said first, second and third magnetic poles (28, 29, 30) being respectively connected to the first ends (18a, 19a, 20a) of first, second and third magnetic cores (18, 19, 20) respectively bearing first, second and third coils (22, 23, 24), a second part (26) of the stator used for closing the magnetic circuits of said transducer being connected to the second ends (18b, 19b, 20b) of these first, second and third magnetic cores (18, 19, 20), the first and second stator parts (16, 26) being only connected by these magnetic cores (18, 19, 20), said coils being able to be fed to control independently said first and second rotors, either in a stepping operating mode or in a rapid or continuous operating mode.

2. Transducer according to claim 1, wherein said first and second magnetic poles (28 and 29) are magnetically insulated from each other by two first necks (32, 33), said second and third magnetic poles (29 and 30) being magnetically insulated from each other by two second necks (34, 35), two first positioning notches (36, 37) being arranged on the edge of said first stator hole (12) so as to define a minimum energy direction (64) for the magnetic axis (78) of said first permanent magnet (42), two second positioning notches (38, 39) being also arranged on the edge of said second stator hole (14) so as to define a second minimum energy direction (66) for the magnetic axis (80) of said second permanent magnet (46).

3. Transducer according to claim 2, wherein said first necks (32, 33) define a first zero coupling direction (40) between said first coil (22) and said first permanent magnet (42) when the magnetic axis of said first permanent magnet is aligned with said first direction, said second necks (34, 35) also defining a second zero coupling direction (44) between said third coil (24) and said second permanent magnet (46) when the magnetic axis (80) of said second permanent magnet is aligned with said second direction, said first and second zero coupling directions being respectively staggered at an angle which is not zero with said first and second minimum energy directions.

4. Transducer according to any of the preceding claims, wherein said first and second rotors (4 and 6) are mechanically coupled to first and second coaxial wheels (50, 54), arranged on either side of said first part (16) of said stator.

5. Transducer according to any of the preceding claims, wherein said first and third coils (22 and 24) are connected to supply means (70) arranged for supplying said first and third coils so as to actuate respectively said first and second rotors (4 and 6).

6. Transducer according to claim 5, wherein said second coil (23) is connected to means (72) for detecting the rotation of said first rotor or said second rotor.

7. Transducer according to claim 6, wherein said detection means (72) are arranged for detecting each missed or faulty step of said first rotor (4) or said second rotor (6) selectively actuated in a stepping operating mode by said supply means (70) which are arranged to allow said stepping operating mode for said first and second rotors.

8. Transducer according to claim 6 or 7, wherein said detection means (72) are arranged for detecting zero crossings of the induced tension (U23) in said second coil (23) when said first and second rotors (4 and 6) are selectively actuated in a rapid or continuous operating mode by said supply means (70) which are arranged to allow rapid or continuous operation of said first and second rotors, said detection means being electrically connected to said supply means to which they supply an input signal when said induced voltage crosses zero, said supply means being arranged to be able to reverse the polarity of the supply voltage when they receive one said input signal.

9. Transducer according to claim 8, wherein said supply means (70) are arranged to allow a rapid or continuous operating mode in both rotational directions of each of said first and second rotors.

10. Transducer according to claim 9, wherein, when a rapid or continuous operating mode in a forward direction is activated, the supply means (70) are arranged so that the polarity of the induced voltage is reversed each time that one said input signal is received.

11. Transducer according to claim 9 or 10, wherein, when one of said first and second rotors (4, 6) is actuated in a rapid or continuous operating mode in a backward rotational direction, said input signals received during an initial period of time having a duration greater than the duration of a first pulse have no effect on the supply of the transducer, the last pulse supplied before the actuated rotors stops being of a greater duration than that of the pulse which precedes it.

12. Transducer according to claim 11, wherein said last pulse is at least substantially twice as long as said pulse which precedes it.

13. Transducer according to claim 5, wherein said second coil (23) may be selectively connected to said supply means (70) to receive a supply current or to means for detecting the rotation of said selectively actuated first rotor (4) and second rotor (6).

14. Transducer according to claim 13, wherein, when said second coil (23) is connected to said supply means, said second coil is electrically connected in series to said first coil (22) when said first rotor (4) is actuated in rotation, said third coil (24) being then short-circuited, and to said third coil when said second rotor (6) is actuated in rotation, said first coil being then short-circuited.

15. Transducer according to claim 12, wherein, when the second coil (23) is connected to said supply means, said second coil is electrically connected in parallel to said first coil (22) when said first rotor (4) is actuated in rotation, said third coil (24) being then short-circuited, and to said third coil when said second rotor (6) is actuated in rotation, said first coil being then short-circuited.

16. Transducer according to one of claims 13 to 15, wherein said supply means (70) are arranged to allow a stepping operating mode and a rapid or continuous operating mode of said transducer, said second coil (23) being connected to said supply means when a stepping operating mode is actuated and to said detection means (72) when a rapid or continuous operating mode is activated.

17. Transducer according to claim 16, wherein, when a rapid or continuous operating mode is activated, said detection means (72) are arranged to detect zero crossings of the induced voltage (U23) in said second coil (23) when one or other of said first and second rotors is actuated, said detection means being electrically connected to said supply means (70) to which they supply an input signal upon each zero crossing of said induced voltage, said supply means being arranged to be able to reverse the polarity of the supply voltage when they receive one said input signal.

18. Transducer according to claim 17, wherein said supply means (70) are arranged to allow a rapid or continuous operating mode in both rotational directions of each of said first and second rotors.

19. Transducer according to claim 18, wherein, when a rapid or continuous operating mode in a forward direction is activated, the supply means (70) are arranged so that the polarity of the supply voltage is reversed each time that one said input signal is received.

20. Transducer according to claim 18 or 19, wherein, when one of said first and second rotors (4 and 6) is activated in rapid or continuous operating mode in a backward direction, said input signals received during an initial period of time having a duration greater than the duration of a first pulse have no effect on the supply of the transducer, the last pulse supplied before the actuated rotor stops being of a greater duration than that of the pulse which precedes it.

21. Transducer according to claim 20, wherein said last pulse is at least substantially twice as long as said pulse which precedes it.
